# EUROPEAN PATENT APPLICATION

(11) **EP 4 675 342 A1**
(43) Date of publication of application: **07.01.2026**
(21) Application number: 23925473.3
(22) Date of filing: 27.03.2023
(51) Int. Cl.: G02C 11/00, G02C 7/08, G02C 7/10

(54) **SMART MIRROR-COATED EYEGLASSES**

(30) Priority: 28.02.2023 KR 20230026572
(71) Applicant: Lim, Seongkyu, Daegu 41954 (KR); Lim, Jongyoon, Daegu 41954 (KR)
(72) Inventor: Lim, Seongkyu, Daegu 41954 (KR); Lim, Jongyoon, Daegu 41954 (KR)
(74) Representative: Vossius & Partner Patentanwälte Rechtsanwälte mbB
(86) International application number: PCT/KR2023/004047
(87) International publication number: WO 2024/181607

(57) **Abstract**

The present invention relates to smart mirror-coated eyeglasses comprising: eyeglass lenses capable of both a sunglass function and an eyeglass function; and an eyeglass frame equipped with a user tough part, a photodetection part, an electrochromic switching pat for switching between the sunglass function and the eyeglass function, and a function control part for controlling the electrochromic switching part by means of an input of the user touch part and the photodetection part, wherein, by means of the switching operation of the electrochromic switching part at the function control part according to the input of the user touch part and the photodetection part, an electrochromic layer positioned on the back surface of a half mirror layer is discolored into a dark color for a backout background by means of a supply of self-generated electricity of solar cell surface parts, and thus the sunglass function in which a mirrored surface is formed on the front surface of the half mirror layer is manifested on the eyeglass lenses, and according to the electrochromic layer being converted to a transparent color, the eyeglass function in which a transparent window is formed on the front surface of the half mirror layer is manifested on the eyeglass lenses, and thus, unlike conventional discolorable lenses which may be discolored by means of sunlight (ultraviolet rays), the present invention may immediately become regular eyeglasses and also mirrored eyeglasses according to the situation desired by a user regardless of sunlight, and may exhibit an ultraviolet blocking or scattered light blocking effect, and may provide beautiful color and stylishness to a wearer.

## Description

### Technical Field

The present invention relates to eyeglasses, more specifically to smart mirror-coated eyeglasses that are capable of becoming both general eyeglasses and mirrored eyeglasses according to a wearer's desired situations, blocking ultraviolet light or scattered light, and providing a beautiful color and stylishness for the wearer.

### Background Art

Recently, eyeglasses, which are typically used for vision correction, have increasingly become a fashion accessory. Some wearers highlight the eyeglasses with frames, some wearers highlight the eyeglasses with lens colors, and some wearers highlight both of them.

Among eyeglass lenses, there are mirror-coated eyeglass lenses. The mirror-coated eyeglass lenses, which are coated on eyeglass lenses and thus look like mirrors, are explosively popular at one time so that many people wear the mirror-coated eyeglasses at least once. However, the wearer feels like the mirror coating of the eyeglass lenses is excessive according to his or her environment or situation, and further, many wearers feel uncomfortable with their situation with which the mirror coating does not match. As a result, the mirror-coated eyeglasses are hard to be continuously worn.

Photochromic lenses, which are eyeglass lenses that become dark in color when exposed to sunlight, have been recently applied to eyeglasses. The photochromic lenses provide the wearer with both clear vision and sunglass-level protection. Because of such many advantages, they become popular.

As the photochromic lenses change color when exposed to sunlight (ultraviolet (UV) light), they become blue in color. That is, the photochromic lenses change color automatically according to sunlight changing in intensity so that they become dark outdoors and become transparent indoors.

Even though the wearer enters the room and is thus not exposed to UV light, however, the color of the photochromic lenses disappears slowly (completely disappears in three to ten minutes). That is, the color of the photochromic lenses is not transparent immediately when the wearer enters the room, which makes him or her feel uncomfortable according to his or her situation. Further, if sunlight (UV light) is blocked indoors, the photochromic lenses disadvantageously have low color changing performance.

Additionally, if temperature or humidity increases, the photochromic lenses do not change color well disadvantageously. So, their color changing performance becomes deteriorated in rainy seasons or midsummer. Besides, the photochromic lenses do not provide various colors for wearers, which makes the wearers feel bored when wearing them.

Therefore, there is a need to develop smart mirror-coated eyeglasses that are capable of becoming both general eyeglasses and mirrored eyeglasses according to a wearer's desired situations, irrespective of sunlight(UV light), blocking UV light or scattered light, and providing a beautiful color and stylishness for the wearer, thereby giving a lot of satisfaction to him or her.

### Disclosure

### Technical Problem

Accordingly, it is an object of the present invention to provide smart mirror-coated eyeglasses that are capable of becoming both general eyeglasses and mirrored eyeglasses according to a wearer's desired situations, regardless of sunlight (UV light), blocking UV light or scattered light, and providing a beautiful color and stylishness for the wearer.

### Technical Solution

To accomplish the above-mentioned object, according to one aspect of the present invention, smart mirror-coated eyeglasses may include: eyeglass lenses having both a sunglass function and an eyeglass function; and an eyeglass frame having a user tough part, a photodetection part, an electrochromic switching part for switching the sunglass function and the eyeglass function to each other, and a function control part for controlling the electrochromic switching part by means of an input of at least one of the user touch part and the photodetection part,
wherein each eyeglass lens may be configured
by laminating a half mirror layer formed by laminating an anti-fingerprint layer and a hard coating layer on top of each other sequentially to form a transparent window or mirror surface on the front surface thereof, an electrochromic layer having an electrochromic surface part positioned on the back surface of the half mirror layer and solar cell surface parts positioned on the edges of the electrochromic surface part, a lens body layer, and a protection layer on top of one another sequentially,
whereby as the electrochromic switching part operates by means of the function control part according to the input of at least one of the user touch part and the photodetection part, if the electrochromic layer that is located on the back surface of the half mirror layer changes in color into a dark color for a blackout background by means of the supply of self-generated electricity of the solar cell surface parts, the sunglass function in which a mirrored surface is formed on the front surface of the half mirror layer is manifested on the eyeglass lens, and if the electrochromic layer changes in color into a transparent color, the eyeglass function in which a transparent window is formed on the front surface of the half mirror layer is manifested on the eyeglass lens.

According to the present invention, further, the electrochromic surface part of the electrochromic layer may include
a lower conductive transparent substrate surface layer positioned on the bottom thereof, an ion storage surface layer, an electrolyte surface layer, and an electrochromic element surface layer with an operating electrode that are laminated on top of one another sequentially in the middle portion of the lower conductive transparent substrate surface layer, and an upper conductive transparent substrate surface layer positioned on top of the electrochromic element surface layer, and
the solar cell surface parts of the electrochromic layer may include dye absorption layers, electrolyte surface layers, and transparent electrode surface layers laminated on top of one another on left and right sides of the lower conductive transparent substrate surface layer, and the upper conductive transparent substrate surface layer positioned on top of the transparent electrode surface layers.

To accomplish the above-mentioned object, according to another aspect of the present invention, smart mirror-coated eyeglasses may include: eyeglass lenses having both a sunglass function and an eyeglass function; and an eyeglass frame having a user tough part, a photodetection part, an electrochromic switching part for switching the sunglass function and the eyeglass function to each other, a function control part for controlling the electrochromic switching part by means of an input of at least one of the user touch part and the photodetection part, and an energy harvesting part for self-generating electricity,
wherein each eyeglass lens may be configured
by laminating a half mirror layer formed by laminating an anti-fingerprint layer and a hard coating layer on top of each other sequentially to form a transparent window or mirror surface on the front surface thereof, an electrochromic layer having an electrochromic surface part positioned on the back surface of the half mirror layer and solar cell surface parts positioned on the edges of the electrochromic surface part, a lens body layer, and a protection layer on top of one another sequentially,
whereby as the electrochromic switching part operates by means of the function control part according to the input of at least one of the user touch part and the photodetection part, if the electrochromic layer that is located on the back surface of the half mirror layer changes in color into a dark color for a blackout background by means of the supply of the self-generated electricity of the energy harvesting part, the sunglass function in which a mirrored surface is formed on the front surface of the half mirror layer is manifested on the eyeglass lens, and if the electrochromic layer changes in color into a transparent color, the eyeglass function in which a transparent window is formed on the front surface of the half mirror layer is manifested on the eyeglass lens.

### Advantageous Effects of Invention

Unlike conventional color-changing lenses which may change color by means of sunlight (UV light), the smart mirror-coated eyeglasses of the present invention may immediately become both general eyeglasses and mirrored eyeglasses according to the situations desired by a wearer, regardless of sunlight, and block the UV light or scattered light, and may provide a beautiful color and stylishness for the wearer.

### Brief Description of Drawings

FIG. 1 is a perspective view showing smart mirror-coated eyeglasses according to the present invention.
FIG. 2 is a perspective view showing an application example of the smart mirror-coated eyeglasses according to the present invention.
FIG. 3 is a sectional view showing an eyeglass lens of the smart mirror-coated eyeglasses according to the present invention.
FIG. 4 is a schematic view showing a configuration and circuit of the eyeglass lenses having both a sunglass function and an eyeglass function according to the present invention.
FIG. 5 is an exemplary view showing switching between the eyeglass function and the sunglass function of the smart mirror-coated eyeglasses according to the present invention.
FIG. 6 is a sectional view showing a variation of the eyeglass lens of the smart mirror-coated eyeglasses according to the present invention.
FIG. 7 is a schematic view showing a configuration and circuit of the variation of the eyeglass lenses having both a sunglass function and an eyeglass function according to the present invention.

### Best Mode for Invention

Hereinafter, example embodiments of the present invention will be described with reference to the accompanying drawings.

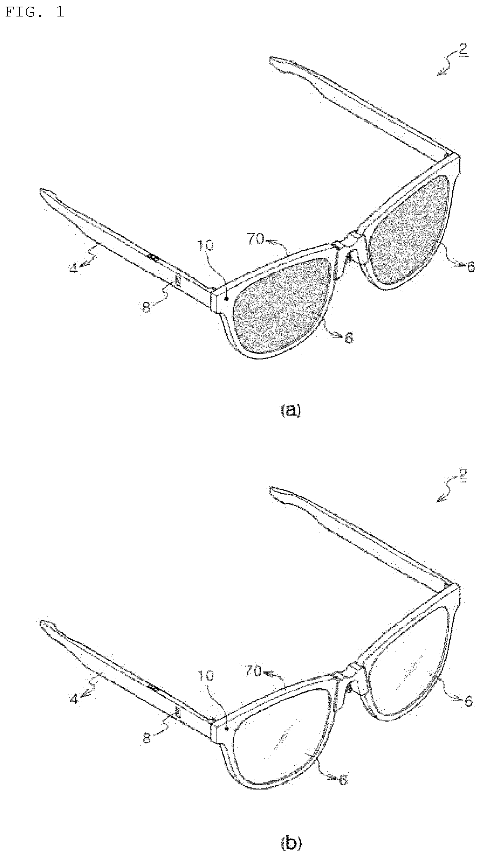

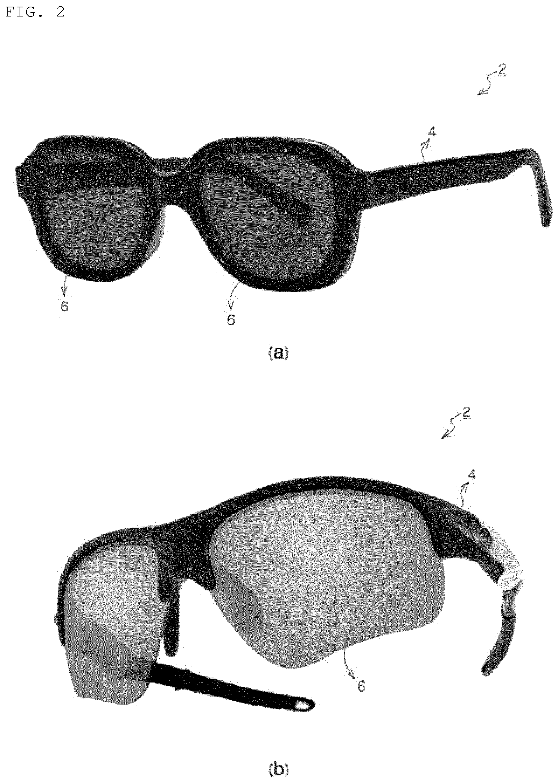

FIG. 1 is a perspective view showing smart mirror-coated eyeglasses 2 according to the present invention, and FIG. 2 is a perspective view showing an application example of the smart mirror-coated eyeglasses 2 according to the present invention.

According to an embodiment of the present invention, the smart mirror-coated eyeglasses 2 are configured to have a sunglass function by means of eyeglass lenses 6 having mirror coatings as shown in FIG. 1a and to have a general eyeglass function by means of the eyeglass lenses 6 becoming transparent as shown in FIG. 1b, as soon as possible according to a wearer's desired environment or situation.

The smart mirror-coated eyeglasses 2 of the present invention are capable of having both the sunglass function and the general eyeglass function. Therefore, as shown in FIG. 2a, an eyeglass frame 4 is made to the shape of a frame for general eyeglasses, and further, as shown in FIG. 2b, the eyeglass frame 4 is made to the shape of a frame for sunglasses such as sports goggles.

The 'sunglass function' of the smart mirror-coated eyeglasses 2 of the present invention has a front surface mirror effect through which a beautiful color and stylishness are exhibited from the front surface of the eyeglasses, while having a glare reduction effect, so that the smart mirror-coated eyeglasses 2 can protect the wearer's eyes from sunlight, scattered light, and harmful UV light.

The 'eyeglass function' of the smart mirror-coated eyeglasses 2 of the present invention provides a function in which the eyeglass lenses 6 become transparent windows when seen on the front surface of the eyeglasses 2, so that even if the eyeglass lenses 6 are lenses with prescription, they can become the transparent windows and protect the wearer's eyes from digital blue light.

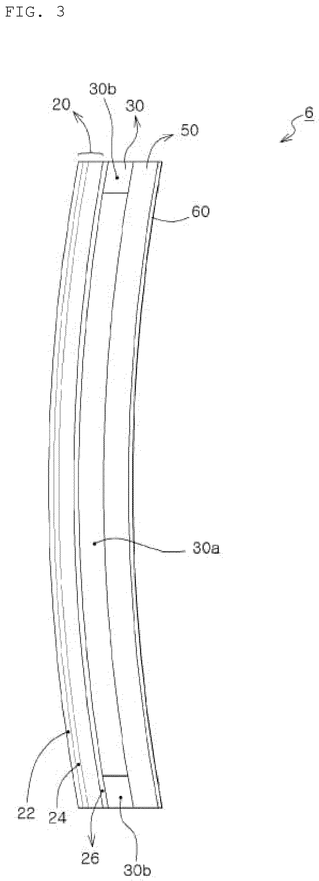

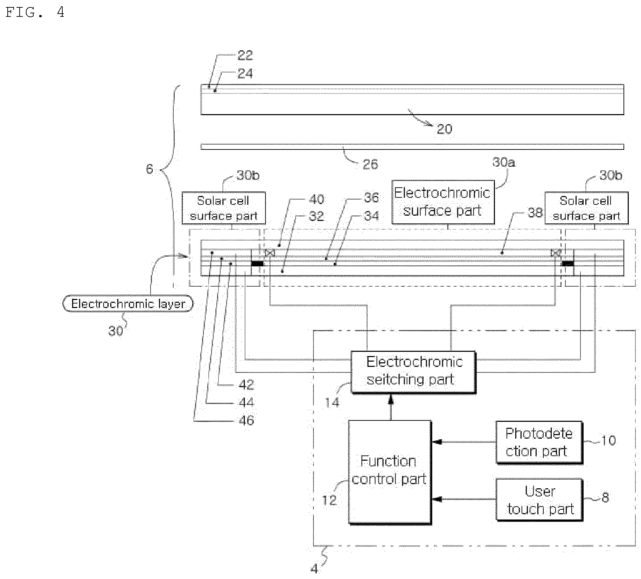

FIG. 3 is a sectional view showing the eyeglass lens 6 of the smart mirror-coated eyeglasses 2 according to the present invention, and FIG. 4 is a schematic view showing a configuration and circuit of the eyeglass lenses 6 having both a sunglass function and an eyeglass function according to the present invention.

According to the embodiment of the present invention, as shown in FIG. 1, the smart mirror-coated eyeglasses 2 include the eyeglass lenses 6 having both a sunglass function and an eyeglass function and the eyeglass frame 4 configured to allow the eyeglass lenses 6 to be coupled to the left and right sides thereof.

The eyeglass frame 4 is equipped with a user tough part 8 and a photodetection part 10 that are exposed to given positions of the outer surface thereof, and as shown in FIG. 4, the eyeglass frame 4 has an electrochromic switching part 14 for switching the sunglass function and the eyeglass function to each other by means of an input of at least one of the user touch part 8 and the photodetection part 10 and a function control part 12 for controlling the electrochromic switching part 14, which are built therein.

To allow the sunglass function and the eyeglass function to be switched immediately according to the user's environment or situation, as shown in FIG. 3, each eyeglass lens 6 has a half mirror layer 20 formed by laminating an anti-fingerprint layer 22 and a hard coating layer 24 on top of each other to form a transparent window or a mirror surface on the front surface thereof according to back surface conditions. Further, each eyeglass lens 6 has an electrochromic layer 30 positioned on the back surface of the half mirror layer 20 in such a way as to allow the half mirror layer 20 to become the mirror surface or transparent window on the front surface thereof and a lens body layer 50 and a protection layer 60 laminated on top of each other sequentially on the back surface of the electrochromic layer 30.

As shown in FIGs. 3 and 4, the half mirror layer 20 is formed by laminating the anti-fingerprint layer 22 and the hard coating layer 24 on top of each other on the exposed portion of the front surface of the eyeglass lens 6, and further, a half mirror surface is formed by coating multi-layered thin films constituted of a reflective type polarizing thin film and an absorbing type polarizing thin film on a base glass surface of the half mirror layer 20 by means of vacuum deposition.

The mirror coating color of the half mirror layer 20 is basically silver, but of course, it may be gold and green. Further, the mirror coating color may become various colors such as blue, red, pink, and the like.

The half mirror layer 20 has mirror reflectivity of 70 to 50% and light transmittance of 30 to 50%, so that it is normally seen as transparent glass on the front surface thereof, but if the electrochromic layer 30 positioned on the back surface of the half mirror layer 20 becomes a blackout background, the mirror with a predetermined color is formed on the front surface of the half mirror layer 20.

The half mirror layer 20 and the electrochromic layer 30 positioned at the back surface of the half mirror layer 20 are bonded to each other by means of a polyethylene vinyl acetate (PVA) polarizing adhesive film 26. The PVA polarizing adhesive film 26 is configured to have a PVA polarizing film for blocking ultraviolet light and reflective light or digital blue light and an UV-curable adhesive applied to both surfaces of the PVA polarizing film.

According to the embodiment of the present invention, as shown in FIG. 4, the electrochromic layer 30 positioned at the back surface of the half mirror layer 20 includes an electrochromic surface part 30a and solar cell surface parts 30b positioned on the edges of the electrochromic surface part 30a. According to the embodiment of the present invention, the electrochromic layer 30 makes use of the electricity self-produced with sunlight by means of the solar cell surface parts 30b located on the edges of the eyeglass lens 6.

According to the embodiment of the present invention, as shown in FIG. 4, the electrochromic surface part 30a of the electrochromic layer 30 includes a lower conductive transparent substrate surface layer 32 positioned on the bottom thereof, an ion storage surface layer 34, an electrolyte surface layer 36, and an electrochromic element surface layer 38 with an operating electrode that are laminated on top of one another in the middle portion of the lower conductive transparent substrate surface layer 32, and an upper conductive transparent substrate surface layer 40 positioned on top of the electrochromic element surface layer 38.

According to the embodiment of the present invention, as shown in FIG. 4, the solar cell surface parts 30b positioned on the edges of the electrochromic layer 30 include dye absorption layers 42, electrolyte surface layers 44, transparent electrode surface layers 46 laminated on top of one another on left and right sides of the lower conductive transparent substrate surface layer 32 and the upper conductive transparent substrate surface layer 40 positioned on top of the transparent electrode surface layers 46.

According to the present invention, by means of the switching operation of the electrochromic switching part 14 by the function control part 12 built in the eyeglass frame 4 according to the input of at least one of the user touch part 8 located on one side leg of the eyeglass frame 4 and the photodetection part 10, the electrochromic layer 30 positioned on the back surface of the half mirror layer 20 changes its color into a transparent color or dark color, while using the self-generated electricity of the solar cell surface parts 30b.

According to the embodiment of the present invention, the electrochromic layer 30 changes its color into a dark color for a blackout background by means of the supply of the self-generated electricity of the solar cell surface parts 30b under the control of the function control part 12, so that the sunglass function in which a mirrored surface is formed on the front surface of the half mirror layer 20 is manifested on the eyeglass lens 6.

According to the embodiment of the present invention, further, the electrochromic layer 30 changes its color into a transparent color by means of the supply of the self-generated electricity of the solar cell surface parts 30b under the control of the function control part 12, so that the eyeglass function in which a transparent window is formed on the front surface of the half mirror layer 20 is manifested on the eyeglass lens 6.

The dark color for the blackout background is visibly exhibited on the back surface of the eyeglass lens 6 having the sunglass function, but the wearer can see a subject located ahead of him or her comfortably, while protecting his or her eyes from various light through the eyeglass lenses 6.

According to the present invention, the user touch part 8 located on one side leg of the eyeglass frame 4 operates in an automatic mode and a manual mode.

For example, if the user touch part 8 is touched once by the wearer's finger, it operates in the manual mode. By means of once touch, an electrochromic toggle command is inputted, and if the user touch part 8 is touched twice in a row by the wearer's finger, it operates in the automatic mode.

If the user touch part 8 is touched once, the manual mode is recognized, so that under the control of the function control part 12, the electrochromic layer 30 of the eyeglass lens 6 is immediately converted from the color changed state currently kept into the opposite color changed state.

If the user touch part 8 is touched twice in a row, the automatic mode is recognized, so that the function control part 12 varies the color changed state of the electrochromic layer 30 adaptively according to an amount of UV light detected through the photodetection part 10. If the amount of light detected through the photodetection part 10 is large, the function control part 12 allows the electrochromic layer 30 to change its color into the dark color for blackout background, and if the amount of light detected through the photodetection part 10 is small, the function control part 12 allows the electrochromic layer 30 to change its color into the transparent color.

According to the present invention, the eyeglass lenses 6 each having the electrochromic layer 30 change color immediately at any time desired by the wearer, and if the manual mode of the user touch part 8 is converted into the automatic mode, the eyeglass lenses 6 change its color adaptively according to the amount of light (UV light), thereby providing many conveniences for the wearer.

According to the embodiment of the present invention, further, the electricity for operating the electrochromic layer 30 is self-generated in the electrochromic layer 30, and therefore, no separate charging is required.

Therefore, the sunglass function or the eyeglass function is performed immediately at any time desired by the wearer, so that unlike the eyeglasses with the photochromic lenses, if the wearer enters the room or comes into a tunnel while driving, such a state is recognized immediately by means of the photodetection part 10 to allow the electrochromic layer 30 to momentarily change color, thereby causing the eyeglass lenses 6 to have a transparent color. Contrarily, on an external environment with sunlight, such an external environment is recognized immediately by means of the photodetection part 10 to allow the electrochromic layer 30 to momentarily change color, thereby permitting the eyeglass lenses 6 to block glare, UV light, and reflective light, while being seen as mirrors on the front surfaces thereof.

Unlike the photochromic lenses that are not released quickly from the color changed state even when the wearer enters the room, the smart mirror-coated eyeglasses 2 of the present invention provides excellent environmental adaptation performance, and further, the smart mirror-coated eyeglasses 2 of the present invention has excellent color changing performance, which is differentiated from the photochromic lenses that do not change color well at a given temperature or humidity.

Like sports sunglasses, moreover, the smart mirror-coated eyeglasses 2 of the present invention blocks UV light and glare, during the wearer's activities on river, lake, sea, etc. where intensities of UV light and visible light are high or during his or her activities such as aviation sports, desert and adventure travel, hiking, skiing, and the like, while looking like a mirror having any one of various colors to thus provide a beautiful color and stylishness for him or her.

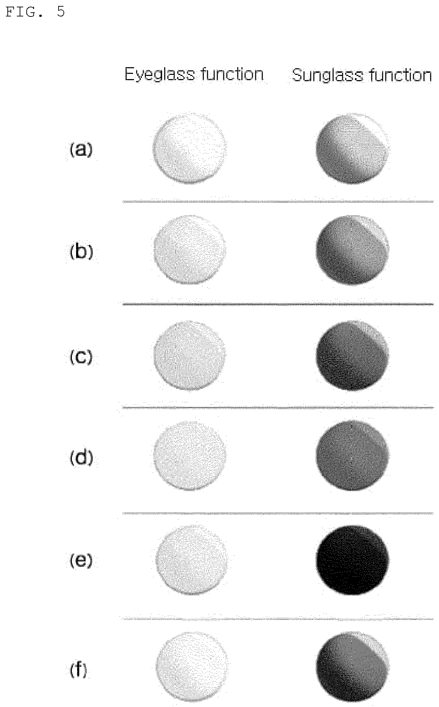

FIG. 5 is an exemplary view showing states wherein the colors of the eyeglass lens 6 having the sunglass function, which are seen on the front surface of the eyeglass lens 6, are silver (FIG. 5a), gold (FIG. 5b), green (FIG. 5c), blue (FIG. 5d), red (FIG. 5e), and pink (FIG. 5f), and the eyeglass lens 6, which has the eyeglass function, has a transparent window (as shown FIGs. 5a to 5f) on the front surface thereof.

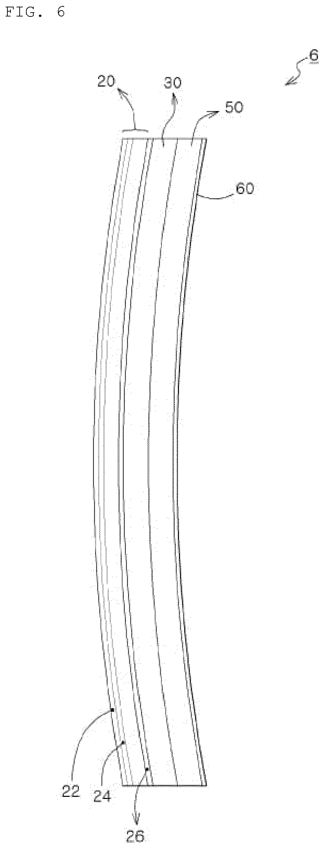

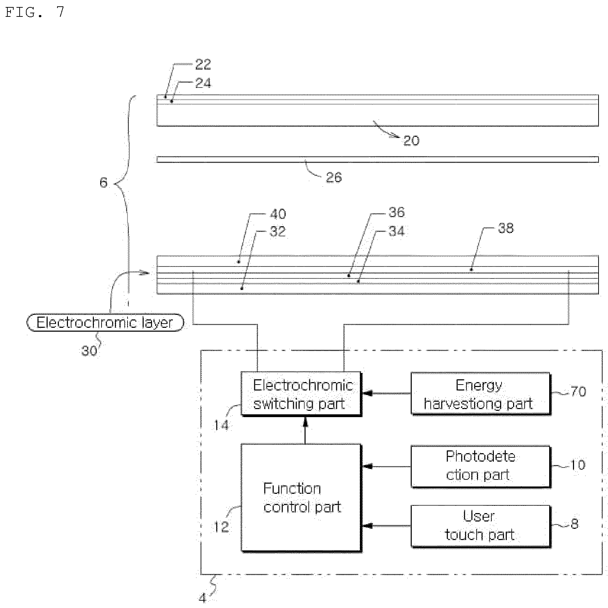

According to the embodiment of the present invention as shown in FIGs. 3 and 4, the electrochromic layer 30 of the eyeglass lens 6 is provided with the solar cell surface parts 30b for self-generating electricity, but according to another embodiment of the present invention, a variation of the eyeglass lens 6 as shown in FIGs. 6 and 7 may be made.

FIG. 6 is a sectional view showing the variation of the eyeglass lens 6 of the smart mirror-coated eyeglasses 2 according to the present invention, and FIG. 7 is a schematic view showing a configuration and circuit of the variation of the eyeglass lenses 6 having both a sunglass function and an eyeglass function according to the present invention.

As shown in FIGs. 6 and 7, an energy harvesting part 70, which is built in the eyeglass frame 4 to self-generate energy, replaces the solar cell surface parts 30b of the electrochromic layer 30 of the eyeglass lens 6 as shown in FIG. 4.

The energy harvesting part 70 converts energy such as sunlight, the wearer's motions, and the like into electricity to thus operate the electrochromic layer 30.

In the variation embodiment as shown in FIG. 6, the electrochromic layer 30 of the eyeglass lens 6 does not have any solar cell surface parts 30b (as shown in FIG. 4) and is configured by laminating a lower conductive transparent substrate surface layer 32, an ion storage surface layer 34, an electrolyte surface layer 36, an electrochromic element surface layer 38 with an operating electrode, and an upper conductive transparent substrate surface layer 40 on top of one another sequentially.

The electrochromic layer 30 of the eyeglass lens 6 makes use of the electrical energy generated from the energy harvesting part 70 built in the eyeglass frame 4 to thus perform the color changing of the eyeglass lens 6.

Referring back to FIGs. 3 and 6, the lens body layer 50 laminated on the back surface of the electrochromic layer 30 of the eyeglass lens 6 is made of glass or eyeglass plastic, and otherwise, it is made as a lens with prescription. The protection layer 60, which has anti-fingerprint performance, is laminated on the back surface of the lens body layer 50.

According to the present invention, the eyeglass lens 6 changes its color into the color having the mirror effect through the half mirror layer 20 and the electrochromic layer 30 to thus provide the sunglass function, so that a density of color changing is not varied according to changes in thickness of the lens such as the lens with prescription.

According to the embodiment or variation of the present invention, the energy is generated from the eyeglass lens 6 itself, but if necessary, the eyeglass frame 4 further has a built-in battery, a power switch, and a charging port for charging the built-in battery through a USB cable. Otherwise, the eyeglass frame 4 has a wireless power supply part with a wireless power charging coil for supplying power wirelessly, without any wired charging port.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

### Industrial Applicability of the Invention

The smart mirror-coated eyeglasses of the present invention are eyeglasses having both a sunglass function and an eyeglass function.

## Claims

1. Smart mirror-coated eyeglasses comprising:
eyeglass lenses having both a sunglass function and an eyeglass function; and
an eyeglass frame having a user tough part, a photodetection part, an electrochromic switching part for switching the sunglass function and the eyeglass function to each other, and a function control part for controlling the electrochromic switching part by means of an input of at least one of the user touch part and the photodetection part,
wherein each eyeglass lens is configured by laminating a half mirror layer formed by laminating an anti-fingerprint layer and a hard coating layer on top of each other sequentially to form a transparent window or mirror surface on the front surface thereof, an electrochromic layer having an electrochromic surface part positioned on the back surface of the half mirror layer and solar cell surface parts positioned on the edges of the electrochromic surface part, a lens body layer, and a protection layer on top of one another sequentially,
whereby as the electrochromic switching part operates by means of the function control part according to the input of at least one of the user touch part and the photodetection part, if the electrochromic layer that is located on the back surface of the half mirror layer changes in color into a dark color for a blackout background by means of the supply of self-generated electricity of the solar cell surface parts, the sunglass function in which a mirrored surface is formed on the front surface of the half mirror layer is manifested on the eyeglass lens, and if the electrochromic layer changes in color into a transparent color, the eyeglass function in which a transparent window is formed on the front surface of the half mirror layer is manifested on the eyeglass lens.

2. The smart mirror-coated eyeglasses according to claim 1, wherein the electrochromic surface part of the electrochromic layer comprises a lower conductive transparent substrate surface layer positioned on the bottom thereof, an ion storage surface layer, an electrolyte surface layer, and an electrochromic element surface layer with an operating electrode that are laminated on top of one another sequentially in the middle portion of the lower conductive transparent substrate surface layer, and an upper conductive transparent substrate surface layer positioned on top of the electrochromic element surface layer, and the solar cell surface parts of the electrochromic layer comprise dye absorption layers, electrolyte surface layers, and transparent electrode surface layers laminated on top of one another on left and right sides of the lower conductive transparent substrate surface layer, and the upper conductive transparent substrate surface layer positioned on top of the transparent electrode surface layers.

3. Smart mirror-coated eyeglasses comprising:
eyeglass lenses having both a sunglass function and an eyeglass function; and
an eyeglass frame having a user tough part, a photodetection part, an electrochromic switching part for switching the sunglass function and the eyeglass function to each other, a function control part for controlling the electrochromic switching part by means of an input of at least one of the user touch part and the photodetection part, and an energy harvesting part for self-generating electricity,
wherein each eyeglass lens is configured by laminating a half mirror layer formed by laminating an anti-fingerprint layer and a hard coating layer on top of each other sequentially to form a transparent window or mirror surface on the front surface thereof, an electrochromic layer having an electrochromic surface part positioned on the back surface of the half mirror layer and solar cell surface parts positioned on the edges of the electrochromic surface part, a lens body layer, and a protection layer on top of one another sequentially,
whereby as the electrochromic switching part operates by means of the function control part according to the input of at least one of the user touch part and the photodetection part, if the electrochromic layer that is located on the back surface of the half mirror layer changes in color into a dark color for a blackout background by means of the supply of the self-generated electricity of the energy harvesting part, the sunglass function in which a mirrored surface is formed on the front surface of the half mirror layer is manifested on the eyeglass lens, and if the electrochromic layer changes in color into a transparent color, the eyeglass function in which a transparent window is formed on the front surface of the half mirror layer is manifested on the eyeglass lens.
